# EUROPÄISCHE PATENTSCHRIFT

(11) **EP 3 497 476 B1**
(45) Veröffentlichungstag und Bekanntmachung des Hinweises auf die Patenterteilung: **22.07.2020**
(21) Anmeldenummer: 17791604.6
(22) Anmeldetag: 11.10.2017
(51) Int. Cl.: G01S 15/93, G01S 13/89, G01S 17/93, G01S 13/87, G01S 13/93

(54) **KRAFTFAHRZEUG UND VERFAHREN ZUR 360°-UMFELDERFASSUNG**
MOTOR VEHICLE AND METHOD FOR A 360° DETECTION OF THE SURROUNDINGS
VÉHICULE À MOTEUR ET PROCÉDÉ DE PERCEPTION DE L'ENVIRONNEMENT À 360°

(30) Priorität: 14.10.2016 DE 102016220075
(43) Veröffentlichungstag der Anmeldung: 19.06.2019
(73) Patentinhaber: Audi AG, 85045 Ingolstadt (DE)
(72) Erfinder: KUBERTSCHAK, Tim, 85055 Ingolstadt (DE); BOCK, Thomas, 85110 Kipfenberg (DE)
(86) Internationale Anmeldenummer: PCT/EP2017/075963
(87) Internationale Veröffentlichungsnummer: WO 2018/069405

(56) Entgegenhaltungen:
- EP-A1- 2 806 288
- EP-A2- 2 058 675
- WO-A1-03/008995
- DE-A1-102008 013 366
- DE-A1-102013 102 153
- DE-A1-102015 000 426
- KUBERTSCHAK TIM ET AL: "Towards a unified architecture for mapping static environments", 17TH INTERNATIONAL CONFERENCE ON INFORMATION FUSION (FUSION), INTERNATIONAL SOCIETY OF INFORMATION FUSION, 7. Juli 2014 (2014-07-07), Seiten 1-8, XP032653908, [gefunden am 2014-10-03]

## Beschreibung

Die Erfindung betrifft ein Kraftfahrzeug mit einer Sensoranordnung zur 360°-Erfassung einer Umgebung des Kraftfahrzeugs. Des Weiteren betrifft die Erfindung auch ein Verfahren zum 360°-Erfassen einer Umgebung eines Kraftfahrzeugs.

Die aktuellen Forschungs-und entwicklungsbezogenen Anstrengungen in der Wissenschaft und Industrie sind stark von hoch-und vollautomatisiert fahrenden Fahrzeugen geprägt. Um das hoch-und vollautomatisierte Fahren zu ermöglichen, muss das Umfeld des Kraftfahrzeugs vollständig und möglichst zuverlässig erfasst werden können. Um eine derartige 360°-Erfassung zu ermöglichen, verwenden wissenschaftliche Einrichtungen aber auch viele industrielle Entwickler zur Realisierung dieses Ziels üblicherweise einen einzelnen Laserscanner mit dreidimensionalem Erfassungsbereich, d.h. der Erfassungsbereich deckt dabei einen Bereich der Umgebung in einem Vollwinkel, d.h. 360°, um das Kraftfahrzeug ab. Um dies zu ermöglichen, wird ein solcher 3D-Laserscanner üblicherweise auf dem Dach eines Kraftfahrzeugs montiert. Die Sensordaten dieses Lasers bilden die Grundlage zur Umfeldwahrnehmung, d.h. der Detektion von statischen und bewegten Hindernissen sowie der Straßenmarkierungen, und sind damit grundlegendes und notwendiges Element für das autonome Fahren. Die Verwendung dieses Sensors führt jedoch zu gewissen Einschränkungen, die seinen Einsatz in Serienfahrzeugen verhindern oder zumindest erschweren. Zu diesen Einschränkungen zählen einerseits der hohe Preis. Dieser ist durch die aufwendige Ausgestaltung des 3D-Lasers bedingt, welcher oft rotierbar ausgestaltet werden muss, um 360° abdecken zu können, und dadurch eine aufwendige Mechanik und Ansteuerung erfordert. Andererseits ist seine prominente, zentrale und gleichzeitig designrelevante Verbauposition auf dem Dach eines Kraftfahrzeugs sehr nachteilig. Der Einsatz der auf diesem Laser aufbauenden und bereits entwickelten Algorithmen zum autonomen Fahren ist daher fraglich. Kraftfahrzeuge mit einer Sensoranordnung zur Umfelderkennung sind aus EP 2 806 288 A1 und DE 10 2008 013 366 A1 bekannt.

Die US 8,825,260 B1 beschreibt ein Verfahren, mit dem entlang bestimmter Hauptrichtungen zwischen einer Bodenebene und Objekten unterschieden werden kann. Die Detektion erfolgt auf Grundlage einer Punktewolke, die entweder aus den Daten eines Lasers oder einer Kamera erzeugt wird. Um Informationen über das gesamte Fahrzeugumfeld bereitzustellen, können dabei diese Sensoreinheiten auf rotierbaren oder neigbaren Plattformen montiert sein.

Wie bereits oben beschrieben, stellt sich auch hier das Problem, dass diese Sensoren sehr kostspielig sind, da sie beweglich bzw. rotierbar angeordnet sein müssen, um das gesamte Fahrzeugumfeld erfassen zu können. Zudem kann auch hier die Positionierung des Sensors auf dem Dach des Kraftfahrzeugs nicht vermieden werden.

Die DE 10 2014 007 565 A1 beschreibt ein Verfahren zum Ermitteln einer jeweiligen Grenze zumindest eines Objekts. Hierbei werden die äußeren Begrenzungen von konkaven Objekten, im allgemeinen Parklücken, in einer Punktewolke detektiert. Die Punktewolke wird dabei ausschließlich aus Daten eines optischen Sensors erzeugt, der bevorzuge eine Kamera darstellt. Alternativ oder zusätzlich kann auch ein Laserscanner verwendet werden. Allerdings lässt sich hierdurch kein 360°-Bereich um das Kraftfahrzeug herum abdecken.

Die EP 2 736 017 A2 beschreibt ein Verfahren zur Ermittlung der Bewegung eines Kraftfahrzeugs, wobei die zwischen zwei Zeitpunkten zurückgelegte Strecke eines Fahrzeugs bestimmt wird. Dafür werden einerseits die zweidimensionalen Intensitätswerte einer Time-of-Flight-Kamera und andererseits die 3D-Information derselben dafür verwendet, den Versatz zwischen den beiden Zeitpunkten zu berechnen. Auch hierdurch lässt sich wiederum kein 360°-Erfassungsbereich bereitstellen.

Die WO 03/008995 A1 beschreibt ein Verfahren und eine Vorrichtung zum Austausch und zur Verarbeitung von Daten. Dafür werden Daten zwischen Sensoren und einer Recheneinheit übertragen und gemeinsam prozessiert. Dazu wird eine optimierte Verwaltung eines Plausibilitätsmaßes für Fusionsobjekte beschrieben, welche die Fusionsobjekte während seiner gesamten Lebensdauer bei der Beurteilung der Relevanz eines Objektes, begleitet. Aufgabe der vorliegenden Erfindung ist es daher, ein Kraftfahrzeug und ein Verfahren zur 360°-Erfassung einer Umgebung des Kraftfahrzeugs bereitzustellen, mittels welchen eine dreidimensionale Erfassung der Umgebung auf möglichst kostengünstige und einfache Weise ermöglicht wird, und insbesondere durch welche die Verwendung bestehender und bewährter Algorithmen zur Datenverarbeitung ermöglicht wird.

Diese Aufgabe wird gelöst durch ein Kraftfahrzeug und ein Verfahren mit den Merkmalen gemäß den unabhängigen Ansprüchen. Vorteilhafte Ausgestaltungen sind in den abhängigen Ansprüchen angegeben.

Das erfindungsgemäße Kraftfahrzeug weist eine Sensoranordnung zur 360°-Erfassung einer Umgebung des Kraftfahrzeugs auf, wobei die Sensoranordnung mehrere Sensoren aufweist, die von einem gleichen Typ sind, wobei die mehreren Sensoren jeweils einen vorbestimmten Erfassungsbereich aufweisen und über eine Außenseite des Kraftfahrzeugs verteilt angeordnet sind, sodass die Erfassungsbereiche einen Gesamterfassungsbereich bereitstellen, der in einem vorbestimmten Abstand zum Kraftfahrzeug, und insbesondere über diesen Abstand hinaus, einen Bereich der Umgebung in einem Vollwinkel um das Kraftfahrzeug abdeckt. Dabei sind die Sensoren derart eingerichtet, dass sie in jeweiligen aufeinanderfolgenden synchronisierten Zeitschritten die Umgebung in ihrem jeweiligen Erfassungsbereich als jeweilige Sensordaten erfassen. Weiterhin weist die Sensoranordnung eine Vorverarbeitungseinrichtung auf, welche die Sensordaten der Sensoren zur Erzeugung eines dreidimensionalen Abbilds des Bereichs der Umgebung für einen jeweiligen gleichen Zeitschritt fusioniert und in einer gemeinsamen Datenbasis darstellt.

Durch die Erfindung wird es vorteilhafterweise ermöglicht die Sensordaten eines teuren 360°-3D-Laserscanner durch die Kombination mehrerer günstiger und einfacher aber dennoch den kompletten Sichtbereich eines solchen 3D-Laserscanners abdeckender Sensoren des gleichen Typs, d.h. derselben Modalität bzw. desselben Messprinzips, zu approximieren. Hierdurch können die Kosten im Vergleich zu einem teuren 360°-3D-Laserscanner deutlich reduziert werden. Ein besonders großer Vorteil hierbei resultiert jedoch aus der unitemporalen Sensordatenfusion. Dies bedeutet, dass ausschließlich die Daten der Einzelsensoren, welche dem gleichen Zeitschritt der Erfassung zugeordnet sind, fusioniert werden, um hieraus ein dreidimensionales Abbild des Bereichs der Umgebung in einer gemeinsamen Datenbasis bereitzustellen. Die daraus resultierende Darstellung der fusionierten Daten ist dabei vorteilhafterweise äquivalent zu einer Darstellung von Sensordaten, die nur von einem einzelnen 360°-3D-Sensor in einem einzelnen Zeitschritt erfasst worden wären. Dies ermöglicht es wiederum in einer folgenden Verarbeitung und Auswertung der Sensordaten auf bereits bestehende und entwickelte Algorithmen zur 360°-Umfelderfassung zurückzugreifen. Beispielsweise lassen sich hierdurch die bereits für das voll-und hochautomatisierte Fahren entwickelten Algorithmen auf die in der gemeinsamen Datenbasis dargestellten fusionierten Sensordaten anwenden.

Insgesamt wird somit durch die Erfindung die Verwendung bestehender und gut erforschter Algorithmen durch das Schaffen derselben Datenbasis ermöglicht, eine schnellere Entwicklung durch die Verwendung bekannter Algorithmen, eine besonders effiziente Entwicklung durch die direkte Übernahme von Forschungsergebnissen in Serienprodukte, eine Kostenreduktion durch den Einsatz einiger weniger günstige Sensoren und gegebenenfalls etablierter Sensortechnologien, und ein versteckter Verbau der Sensoren, was sowohl für das Fahrzeugdesign als auch für den Sensorschutz von Vorteil ist.

Bei einer vorteilhaften Ausgestaltung der Erfindung stellen die Sensoren jeweils Laserscanner dar. Laserscanner sind dabei gleich in mehrfacher Hinsicht besonders vorteilhaft. Zum einen eignen sich diese besonders gut zur Umfelderfassung gerade für Anwendungen im hoch-und vollautomatisierten Funktionsbereich, da sie nicht nur eine hochauflösende 3Dimensionale Erfassung ihres Umfelds ermöglichen, sondern beispielsweise gleichzeitig auch dazu ausgelegt sind, Intensitätsbilder der Umgebung bereitzustellen. Hierdurch können die durch Laserscanner erfassten Sensordaten, insbesondere durch die Intensitätsbilder, auch zur Fahrspurerkennung und zur Erkennung von Fahrbahnmarkierungen oder Ähnlichem genutzt werden. Zudem stellen Laserscanner ihre 3D-Daten als 3D-Punktewolken bereit, die auf einfache Weise zu einer gemeinsamen 3D-Punktewolke fusioniert werden können und hierdurch gerade die Datenbasis bereitgestellt wird, auf welcher die für aufwändige 360°-Laserscanner entwickelten Algorithmen arbeiten.

Im Allgemeinen können jedoch Sensoren jedes beliebigen Typs verwendet werden, sodass die Sensoren auch Radare oder Kameras oder Stereokameras oder Time-of-Flight-Kameras oder Ultraschallsensoren darstellen können. Somit sind die Sensoren der Sensoranordnung, deren erfasste Sensordaten unitemporal fusioniert in der gemeinsamen Datenbasis dargestellt werden entweder alle Radare, oder alle Kameras, usw..

Vorteilhaft ist es dabei, wenn die Sensoren als 3D-Sensoren ausgebildet sind, d.h. ein jeweiliger Sensor ist dazu ausgebildet, die Umgebung als 3D-Daten zu erfassen. Dies ist beispielsweise für Laserscanner, StereoKameras, Time-of-Flight-Kameras, Radare oder Ultraschallsensoren der Fall. Hierdurch wird es nämlich vorteilhafterweise ermöglicht, die Anzahl erforderlicher Sensoren auf ein Minimum zu reduzieren. Dies wiederum reduziert den erforderlichen Bauraum für die Sensoren. Jedoch lassen sich auch 2D Sensoren, wie einfache Kameras, verwenden. In diesem Fall ist es bevorzugt, dass der Gesamterfassungsbereich redundant durch entsprechende Überlappungen der einzelnen Erfassungsbereiche der Kameras abgedeckt wird. So lassen sich analog zu einer Stereokamera auch Entfernungsinformationen aus jeweils zwei sich überlappenden Bildaufnahmen der Kameras ermitteln.

Bei einer weiteren vorteilhaften Ausgestaltung der Erfindung ist die Vorverarbeitungseinrichtung dazu ausgelegt, die fusionierten Sensordaten als eine 3D-Punktewolke als Datenbasis bereitzustellen. Da, wie oben beschrieben, die meisten erprobten Algorithmen unter Verwendung von 3D-Punktewolken als Datenbasis arbeiten, ist diese Datenbasis besonders vorteilhaft.

Bei einer weiteren vorteilhaften Ausgestaltung der Erfindung ist die Vorverarbeitungseinrichtung dazu ausgelegt, die fusionierten Sensordaten in eine Objektlisten-Darstellung oder eine Fences-Darstellung oder eine Belegungsgitter-Darstellung umzuwandeln. Eine derartige Umwandlung kann entweder zusätzlich zur Darstellung der Sensordaten als eine 3D-Punktewolke oder auch alternativ erfolgen. Die Datenbasen bzw. Darstellungen können dabei auch in Abhängigkeit vom Typ der Sensoren der Sensoranordnung festgelegt sein. Zudem können auch die Darstellungen in Abhängigkeit von den Anforderungen an die nachfolgend durchzuführenden Schritte gewählt werden.

Gemäß der Objektlisten-Darstellung können den fusionierten Sensordaten entnommene Objekte in Objektlisten eingetragen werden. Durch Fences-Darstellungen, oder auch Linienzugdarstellungen genannt, können beispielsweise Hindernisse als offene oder als geschlossene Linienzüge sowie auch ermittelte Freiräume dargestellt werden. Bei einer Belegungsgitter-Darstellung wird die Umgebung gitterförmig in Zellen eingeteilt, welchen diverse Eigenschaften, wie beispielsweise die Wahrscheinlichkeit, dass sie belegt sind, zugeordnet werden können. Die Zuordnung dieser Eigenschaften basiert entsprechend auf den erfassten Sensordaten. Beispielsweise kann in Zellen, in welcher ein Laserscanner einen Scanpunkt erfasst hat, eine hohe oder erhöhte Belegungswahrscheinlichkeit zugeordnet werden.

Gemäß der Erfindung überschneiden sich zumindest zwei der Erfassungsbereiche der Sensoren, wodurch ein Überschneidungsbereich bereitgestellt ist, und wobei die Vorverarbeitungseinrichtung dazu ausgelegt ist, einen Abgleich der von jeweiligen Sensoren im Überschneidungsbereich erfassten Sensordaten durchzuführen. Sich überlappende bzw. überschneidende Erfassungsbereiche der Sensoren lassen sich damit vorteilhafterweise nutzen, um beispielsweise Messunsicherheiten zu reduzieren und eine hohe Güte der Sensordatenerfassung zu erreichen. Bei der Verwendung von Radarsensoren zur Approximation eines 360°-3D-Laserscanners ist es zum Beispiel möglich, die Messunsicherheiten einzelner Reflexionen zu verringern. Bei typischen Radarsensoren steigt zum Beispiel der Winkelfehler mit steigendem Abstand von der Sensorhauptachse. Durch die Sensordatenfusion besteht nun vorteilhafterweise die Möglichkeit, diesen Fehler in Bereichen mit sich überschneidenden Sensorsichtbereichen, d.h. Erfassungsbereichen, zu verringern und somit ein genaueres Abbild des Umfelds zu erzeugen. Auf diesem Weg ist es zum Beispiel möglich, selbst mit relativ ungenauen Daten günstiger Radare eine ähnlich hohe Güte wie die Punktewolke des 360°-3D-Laserscanners zu erreichen. Derartige Verbesserungen lassen sich auch durch einen Abgleich der redundanten Sensordaten Sensoren eines anderen Typs in gleicher Weise erzielen.

Insbesondere kann damit vorteilhafterweise auf Basis des Abgleichs eine Sensordatenkorrektur und/oder eine Messunsicherheitskorrektur und/oder eine Korrektur betreffend eine Existenzwahrscheinlichkeit durchgeführt werden, wozu die Vorverarbeitungseinrichtung ebenfalls vorzugsweise ausgelegt ist. Zur Sensordatenkorrektur können zum Beispiel die einen gleichen Ortsbereich der Umgebung betreffenden und von zwei jeweiligen Sensoren, des gleichen Typs, erfassten Sensordaten gemittelt werden, insbesondere auch mit einer entsprechenden Gewichtung in Abhängigkeit ihrer jeweiligen Messgenauigkeiten. Auch können die von jeweiligen Sensoren in sich überschneidenden Bereichen erfassten Sensordaten durch ihre Addition eine höhere Auflösung in diesem sich überschneidenden Erfassungsbereich liefern, wodurch ein erhöhter Detaillierungsgrad des dreidimensionalen Abbilds der Umgebung bereitgestellt wird. Im Fall, dass bei der Bereitstellung der Sensordaten zu den entsprechenden Sensordaten gleichzeitig auch in Abhängigkeit von einem Winkelfehler gegenüber einer Sensorhauptachse des jeweiligen Sensors die jeweilige Messunsicherheit angegeben wird, um daraus beispielsweise in späteren Verarbeitungsschritten die Sicherheit oder Zuverlässigkeit für die Detektion oder Klassifizierung eines Objekts abzuleiten, so kann durch die in überlappenden Erfassungsbereichen redundant erfassten Sensordaten auch eine entsprechende Messunsicherheitskorrektur durchgeführt werden, welche diesen Sensordaten eine entsprechend geringere Messunsicherheit aufgrund ihrer Redundanz zuordnet. Entsprechendes gilt auch für Existenzwahrscheinlichkeiten, die sich insbesondere auf die Existenz von Objekten in der Umgebung beziehen, wobei zur Berechnung dieser Existenzwahrscheinlichkeiten die genannten und entsprechend korrigierbaren Messunsicherheiten berücksichtigt werden können.

Bei einer weiteren vorteilhaften Ausgestaltung der Erfindung sind die Sensoren dazu ausgelegt, eine von einer Positionsinformation verschiedene Information bereitzustellen, insbesondere eine Intensitätsinformation und/oder eine Farbinformation und/oder eine Geschwindigkeitsinformation eines erfassten Umgebungsbereichs in Relation zum Kraftfahrzeug, wobei das Kraftfahrzeug weiterhin eine Verarbeitungseinrichtung aufweist und die Vorverarbeitungseinrichtung dazu ausgelegt ist, die in der gemeinsamen Datenbasis fusionierten Daten an die Verarbeitungseinrichtung zu übermitteln, wobei die Verarbeitungseinrichtung dazu ausgelegt ist, die fusionierten Sensordaten mit der durch die Sensoren bereitgestellten von der Positionsinformation verschiedene Information zu kombinieren. Hierdurch lassen sich nicht nur die durch die Sensoren erfassten 3D-Informationen der Umgebung bereitstellen, sondern es können auch weitere sensorspezifische Merkmale mit den unitemporal fusionierten Sensordaten in einem nachfolgenden Verarbeitungsschritt kombiniert werden. So lassen sich weitere Informationen durch die von zum Beispiel Laserscannern bereitgestellten Intensitätswerte der Messung nutzen, sowie die durch zum Beispiel RGB-Kameras bereitgestellten Farben oder die durch Radare zusätzlich bereitgestellten Geschwindigkeiten. Die Art dieser zusätzlichen Informationen hängt damit vom Typ des verwendeten Einzelsensors ab. Durch das Nutzen dieser zusätzlichen Informationen kann die Sicherheit der Umfeldwahrnehmung, wie beispielsweise die Detektion von statischen und bewegten Objekten, Hindernissen oder Straßenmarkierungen deutlich gesteigert werden.

Auch ist es möglich zu weiteren Steigerung der Zuverlässigkeit und Robustheit der Umfeldwahrnehmung mehrere Sensoren jeweils eines anderen Typs zu verwenden. Hierzu kann es beispielsweise vorgesehen sein, dass das Kraftfahrzeug mehrere Sensoren eines ersten Typs aufweist und mehrere Sensoren eines zweiten Typs, wobei die von den Sensoren des ersten Typs erfassten Sensordaten unitemporal fusioniert werden und auch die von den Sensoren des zweiten Typs erfassten Sensordaten entsprechend separat unitemporal fusioniert werden und ebenfalls in einer gemeinsamen Datenbasis dargestellt werden, wobei die jeweiligen Datenbasen betreffend die Sensoren des ersten und zweite Typs nicht notwendigerweise gleich sein müssen. Im nachfolgenden Verarbeitungsschritten können dann entsprechend auch die jeweiligen unitemporal fusionierten Sensordaten der Sensoren des unterschiedlichen Typs wiederum kombiniert und fusioniert werden, oder auch unabhängig voneinander weiterverarbeitet werden. Durch die gleichzeitige Abbildung des kompletten Fahrzeugumfelds mit unterschiedlichen Sensormessprinzipien, wie beispielsweise Radar und Laser, kann die Sicherheit für Fahrerassistenzsysteme zusätzlich erhöht werden.

Bei einer weiteren vorteilhaften Ausgestaltung der Erfindung sind die mehreren Sensoren in einer jeweiligen Höhe angeordnet, wobei sich die jeweiligen Höhen in einem vorbestimmten Höhenbereich in Bezug auf die Fahrzeughochachse befinden. Dieser Höhenbereich kann den Anforderungen entsprechend gewählt sein. Auch kann dieser an die Ausbildung der Sensoren des entsprechenden Typs angepasst sein, insbesondere an deren Erfassungsbereich in vertikaler Richtung, d.h. in Richtung der Hochachse. Um den Gesamterfassungsbereich in seiner vertikalen Ausdehnung möglichst homogen zu halten, ist es zudem vorteilhaft, wenn die Sensoren in einer gleichen Ebene senkrecht zur Hochachse angeordnet sind. Für Sensoren, welche einen großen Erfassungsbereich in vertikaler Richtung aufweisen, wie beispielsweise Kameras, ist es zudem ausreichend, diese Sensoren verteilt um das Fahrzeug in nur einer einzigen Ebene anzuordnen.

Laserscanner dagegen weisen üblicherweise einen sehr großen Erfassungsbereich in einer ersten Richtung und einen relativ kleinen Erfassungsbereiche in einer zweiten Richtung senkrecht zur ersten auf. Beispielsweise kann der Erfassungsbereich in der ersten Richtung in Bezug auf den Laserscanner einen Winkel von 140° bis 160° abdecken, während der Erfassungsbereich in der zweiten Richtung senkrecht dazu beispielsweise maximal 10°, insbesondere 3 bis 5° abdeckt.

Daher stellt es eine besonders vorteilhafte Ausgestaltung der Erfindung dar, dass mehrere erste Sensoren der mehreren Sensoren in einer jeweiligen ersten Höhe angeordnet sind und mehrere zweite Sensoren der mehreren Sensoren in einer jeweiligen zweiten Höhe angeordnet sind, wobei die jeweiligen ersten Höhen in einem vorbestimmten ersten Höhenbereich in Bezug auf die Fahrzeughochachse angeordnet sind und die jeweiligen zweiten Höhen in einem zweiten Höhenbereich in Bezug auf die Fahrzeughochachse angeordnet sind, der höher ist als der erste Höhenbereich. Die dem ersten und zweiten Höhenbereich jeweils zugeordneten Sensoren müssen dabei nicht notwendigerweise auf einer gleichen Ebene angeordnet sein, allerdings ist es aus dem bereits zuvor beschriebenen Gründen vorteilhaft, da so eine einheitliche Höhe des Gesamterfassungsbereich in vertikaler Richtung erreicht werden kann. Andererseits kann es vorteilhaft sein, die Sensoren nicht in gemeinsamen Ebenen anzuordnen, sondern auch in beliebiger Weise in ihrer Höhenposition verteilt, um bessere Anpassungsmöglichkeiten an kraftfahrzeugspezifische Geometrien zu ermöglichen.

Um die Sensordaten der einzelnen Sensoren unitemporal in geeigneter Weise zu fusionieren ist es vorteilhaft, die bekannten Positionen der Einzelsensoren und ihre geometrische Relation zueinander, sowie auch optional ihre Ausrichtung bzw. Orientierung, zur verwenden, um einen korrekten geometrischen Bezug der durch die Einzelsensoren erfassten Umgebungsbereiche herzustellen. Alternativ oder zusätzlich können zu diesem Zweck auch bekannte Bildregistrierungsverfahren oder ähnliches verwendet werden.

Zudem kann das Kraftfahrzeug auch ein Fahrerassistenzsystem, insbesondere zum hoch- oder vollautomatisierten Fahren, aufweisen, welches die Vorverarbeitungseinrichtung und/oder die Verarbeitungseinrichtung umfasst, und welches dazu ausgelegt ist, auf Basis eines Ergebnisses einer Auswertung der fusionierten Sensordaten eine Assistenzfunktion auszulösen oder durchzuführen.

Des Weiteren betrifft die Erfindung ein Verfahren zum 360°-Erfassen einer Umgebung eines Kraftfahrzeugs, wobei mehrere Sensoren des gleichen Typs in jeweiligen synchronisierten Zeitschritten einen jeweiligen Erfassungsbereich betreffende Sensordaten bereitstellen, und wobei weiterhin die jeweiligen Erfassungsbereiche einen Gesamterfassungsbereich bereitstellen, der in einem vorbestimmten Abstand zum Kraftfahrzeug einen Bereich der Umgebung in einem Vollwinkel um das Kraftfahrzeug abdeckt. Weiterhin fusioniert eine Vorverarbeitungseinrichtung die Sensordaten der Sensoren für einen jeweiligen gleichen Zeitschritt und stellt diese in einer gemeinsamen Datenbasis dar.

Die für das erfindungsgemäße Kraftfahrzeug und seine Ausgestaltungen beschriebenen Merkmale, Merkmalskombinationen und deren Vorteile gelten in gleicher Weise für das erfindungsgemäße Verfahren. Darüber hinaus ermöglichen die im Zusammenhang mit dem erfindungsgemäßen Kraftfahrzeug und seinen Ausgestaltungen genannten gegenständlichen Merkmale die Weiterbildung des erfindungsgemäßen Verfahrens durch weitere Verfahrensschritte.

Weitere Vorteile, Merkmale und Einzelheiten der Erfindung ergeben sich aus der nachfolgenden Beschreibung bevorzugter Ausführungsbeispiele sowie anhand der Zeichnung.

Dabei zeigen:
- Fig. 1: eine schematische Darstellung eines Kraftfahrzeugs in einer Draufsicht mit einer Sensoranordnung gemäß einem Ausführungsbeispiel der Erfindung;
- Fig. 2: eine schematische Darstellung des Kraftfahrzeugs mit der Sensoranordnung in einer Seitenansicht gemäß einem Ausführungsbeispiel der Erfindung;
- Fig. 3: eine schematische Darstellung eines aus einer 3D-Punktewolke erzeugten dreidimensionalen Abbilds der Umgebung; und
- Fig. 4: ein Ablaufdiagramm zur Veranschaulichung eines Verfahrens zur 360°-Erfassung der Umgebung eines Kraftfahrzeugs gemäß einem Ausführungsbeispiel der Erfindung.

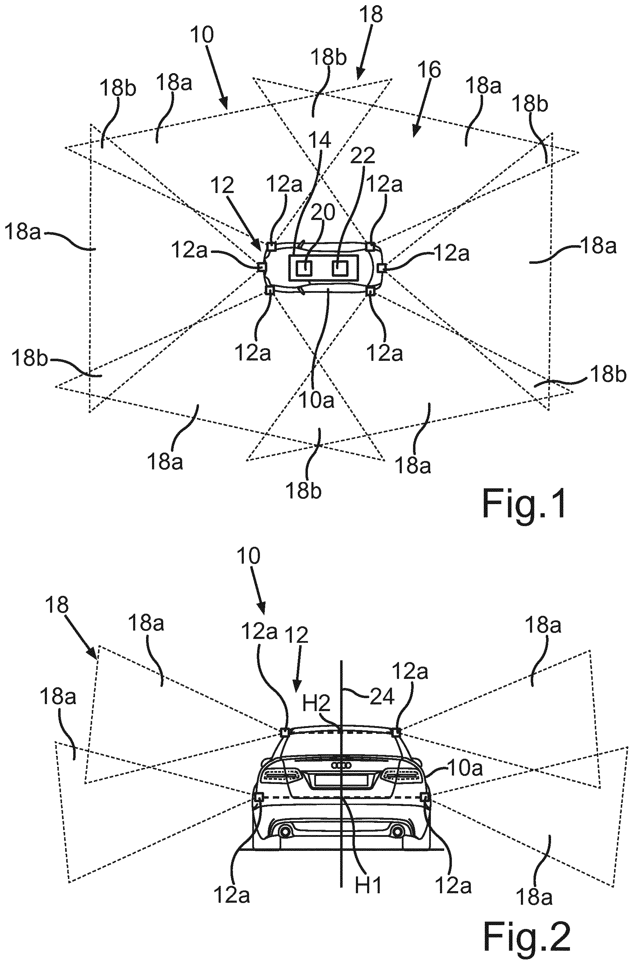

Fig. 1 zeigt eine schematische Darstellung eines Kraftfahrzeugs 10 mit einer Sensoranordnung 12 gemäß einem Ausführungsbeispiel der Erfindung. Das Kraftfahrzeug 10 weist beispielsweise ein Steuermodul 14 auf, welches zur Steuerung von Fahrerassistenzfunktionen, insbesondere auch zur Steuerung von voll- und hochautomatisierten Fahrfunktionen des Kraftfahrzeugs 10 ausgebildet sein kann. Derartige hoch- und vollautomatisierte Fahrfunktionen erfordern eine zuverlässige Umfelderfassung des Umfelds 16 des Kraftfahrzeugs 10.

Um dies auf möglichst kostengünstige Weise umzusetzen, weist die Sensoranordnung 12 des Kraftfahrzeugs 10 mehrere Sensoren 12a vom gleichen Typ auf. Diese Sensoren 12a können beispielsweise als Kameras, als Radare, usw. ausgebildet sein. Besonders vorteilhaft ist es dabei wenn Sensoren 12a als einfache Laserscanner ausgebildet sind. Diese Sensoren 12a weisen jeweilige ihnen zugeordnete Erfassungsbereiche 18a auf, welche in Summe einen Gesamterfassungsbereich 18 bereitstellen. Dieser Gesamterfassungsbereich 18 erstreckt sich in einem Vollwinkel um das Kraftfahrzeug 10 herum und deckt damit in Bezug auf das Kraftfahrzeug 10 360° der Umgebung bzw. des Umfelds 16, zumindest ab einem vorbestimmten Abstand zum Kraftfahrzeug 10 ab. Durch diese mehreren Sensoren 12a und ihre jeweiligen Erfassungsbereiche 18a lässt sich vorteilhafterweise der komplette Sichtbereich eines 360°-3D-Laserscanners approximieren. Hierzu können wie in diesem Beispiel dargestellt sechs einfache Laserscanner derart verteilt an der Außenseite 10a des Kraftfahrzeugs 10 angebracht werden, dass ihre sechs Sichtbereiche 18a den kompletten Sichtbereich eines 360°-3D-Laserscanners abdecken. Die Sensoren 18a können zum Beispiel an der Fahrzeugfront, am Heck, an den Eckbereichen, an den Seitenbereichen im Bereich der Türen, usw. angeordnet sein. Die Anzahl der zu verwendenden Sensoren 12a und deren Position können dabei von der Art der Sensoren 12a und der gewünschten Güte der Approximation abhängen. Zum Beispiel kann die Anzahl steigen, falls die Einzelsensoren 12a einen kleinen Erfassungsbereich haben oder falls das Umfeld 16 komplett und gegebenenfalls redundant durch die erfassten Sensordaten beschrieben werden soll. Dabei kann berücksichtigt werden, dass ein bestimmter Umgebungsbereich in der Nähe des Fahrzeugs nicht von Erfassungsbereichen 18 der Sensoren 12a abgedeckt sein muss, da auch ein 360°-3D-Laserscanner, wenn dieser auf dem Dach eines Kraftfahrzeugs angeordnet ist, in diesen Bereichen ebenfalls Abschattungen aufweist und diese Bereiche in der Nähe des Kraftfahrzeugs nicht erfassen kann.

Die Sensoren 12a erfassen nun das Umfeld 16 in ihren jeweiligen Erfassungsbereichen 18a in Form von jeweiligen Sensordaten, die an eine Vorverarbeitungseinrichtung 20 des Kraftfahrzeugs 10, die insbesondere Teil des Steuermoduls 14 sein kann, zur Vorverarbeitung bereitgestellt werden.

Die Erfassung durch die jeweiligen Sensoren 12a findet dabei in definierten und synchronisierten Zeitschritten statt. Eine solche Synchronisation kann zum Beispiel durch ein Synchronisationssignal bereitgestellt werden, insbesondere welches die Erfassung der jeweiligen Sensoren 12a triggert oder auf Basis von welchem die Sensoren 12a ihre jeweiligen Erfassungszeitschritte abgleichen. Die einem gleichen Zeitschritt zugeordneten Sensordaten aller Sensoren 12a werden dann durch die Vorverarbeitungseinrichtung 20 fusioniert und in einer gemeinsamen Datenbasis, zum Beispiel als 3D-Punktewolke dargestellt. Diese unitemporale Fusion ermöglicht das Bereitstellen einer 3D-Punktewolke, die sich in ihren Eigenschaften von der durch einen 360°-3D-Laserscanner bereitgestellten 3D-Punktewolke nicht unterscheidet. Die Erfassung eines teuren 3D-Laserscanners kann damit auf vorteilhafterweise durch mehrere günstige Einzelsensoren 18a emuliert werden. Dies ermöglicht vorteilhafterweise die Verwendung bereits entwickelter und erprobter Algorithmen zur Weiterverarbeitung der fusionierten Sensordaten, was beispielsweise durch eine Verarbeitungseinrichtung 22 des Kraftfahrzeugs 10 durchgeführt werden kann. Zudem bietet die Verwendung mehrerer Einzelsensoren 12a noch weitere große Vorteile. Wie in Fig. 1 dargestellt, gibt es auch Überschneidungsbereiche 18b, in welchem sich zumindest zwei Erfassungsbereiche 18a überlappen. In diesen Bereichen 18b werden entsprechend redundante Sensordaten bereitgestellt, d.h. also von mindestens zwei Sensoren 12a im selben Umgebungsbereich, die dann vorteilhaft verwendet werden können, um eine höhere Auflösung in diesen Bereichen bereitzustellen, Messunsicherheiten zu kompensieren oder zu reduzieren, oder im Allgemeinen durch einen Datenabgleich eine höhere Güte zu erreichen.

Je nach Anwendungsfall und in vertikaler Richtung abzudeckenden Umgebungsbereich können die Sensoren 12a auch auf unterschiedlichen Ebenen in Bezug zur Hochachse 24 des Kraftfahrzeugs 10 angeordnet werden, wie in Fig. 2 schematisch dargestellt. Fig. 2 zeigt dabei wiederum das Kraftfahrzeug 10 mit der Sensoranordnung 12 in einer Seitenansicht. Die Sensoren 12a sind hierbei auf 2 Ebenen verteilt, insbesondere einer ersten Ebene, welche sich in Bezug zur Hochachse 24 auf einer ersten Höhe H1 befindet und auf eine zweite Ebene, welche sich in Bezug zur Hochachse 24 auf einer zweiten Höhe H2 befindet. Eine derartige Anordnung ist insbesondere bei der Verwendung von Laserscanner als Sensoren 12a besonders vorteilhaft. Laserscanner werden bevorzugt derart an Kraftfahrzeug 10 bzw. dessen Außenseite 10a angeordnet, dass der Erfassungsbereich in horizontaler Richtung größer ist als in vertikaler Richtung. Der Erfassungsbereich 18a kann beispielsweise in horizontaler Richtung einen Winkel zwischen 140° und 160° abdecken, während der Erfassungsbereich 18a in vertikaler Richtung beispielsweise einen Winkelbereich zwischen 3° und 10°, insbesondere zwischen 3° und 5° abdecken kann. Durch eine solche Anordnung lässt sich somit vorteilhafterweise auch eine hohe räumliche Abdeckung des Umfelds 16 bereitstellen, was eben durch die zueinander höhenversetzten Sensoren 12a ermöglicht wird.

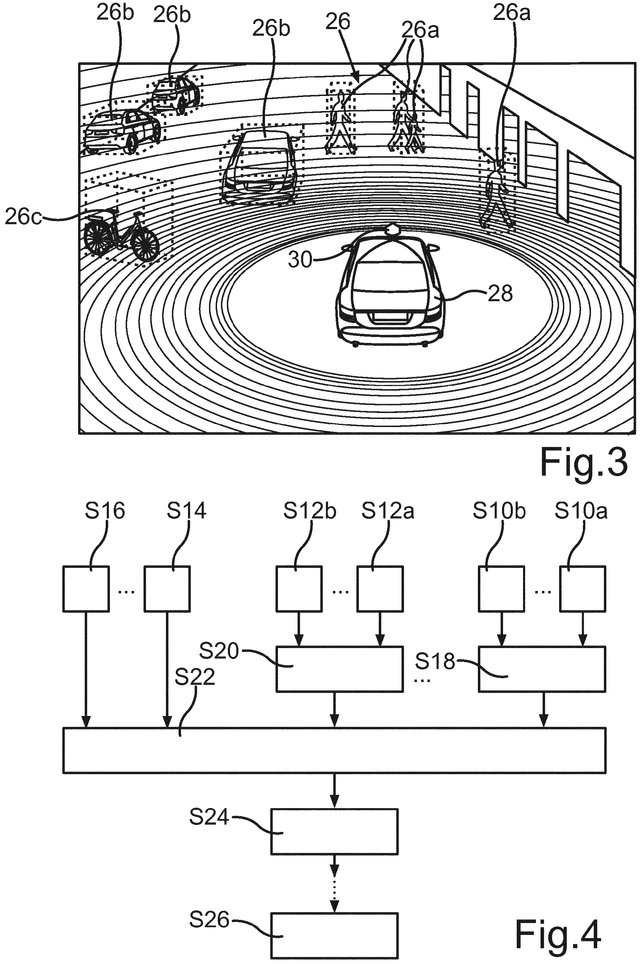

Fig. 3 zeigt eine schematische Darstellung eines dreidimensionalen Abbilds der Umgebung bzw. des Umfelds 16 auf Basis einer 3D-Punktewolke, welche hierbei durch einen auf einem Dach eines Kraftfahrzeugs 28 montierten 3D-Laserscanners, insbesondere eines Velodyne-Laserscanner, 30 erzeugt wurde. Dieses dreidimensionale Abbild 26 auf Basis einer 3D-Punktewolke lässt sich in gleicher Weise auch durch das Kraftfahrzeug 10 mit der Sensoranordnung 12 gemäß einer Ausführungsform der Erfindung bereitstellen, insbesondere durch die Erzeugung dieser 3D-Punktewolke durch unitemporale Datenfusion der durch die Einzelsensoren 12a erfassten Sensordaten. Ein solches Abbild 26 lässt sich nun vorteilhafterweise in weiteren Verarbeitungsschritten, die zum Beispiel durch die Verarbeitungseinrichtung 22 durchgeführt werden können, zur Detektion von Personen 26a, Fahrzeugen 26b und Radfahrern 26c verwenden.

Fig. 4 zeigt ein Ablaufdiagramm zur Veranschaulichung eines Verfahrens zur 360°-Erfassung der Umgebung eines Kraftfahrzeugs 10 gemäß einem Ausführungsbeispiel der Erfindung. Hierbei werden in den Schritten S10a und S10b von Sensoren 12a eines ersten Typs, beispielsweise Laserscanner, Sensordaten zumindest näherungsweise, das heißt vorzugsweise mit einem maximalen zeitlichen Unterschied im Millisekundenbereich, insbesondre maximal zweistelligen Millisekundenbereich, gleichzeitig erfasst und an die Vorverarbeitungseinrichtung 20 bereitgestellt. Optional kann es auch vorgesehen sein, das durch weitere Sensoren 12a eines zweiten Typs, zum Beispiel Radare oder Kameras in den Schritten S12a und S12b ebenfalls zueinander zeitgleich Sensordaten erfasst und an die Vorverarbeitungseinrichtung 20 bereitgestellt werden. In Schritt S18 führt die Vorverarbeitungseinrichtung 20 eine unitemporale Datenfusion der durch die Sensoren 12a des ersten Typs erfassten Sensordaten durch. Hierbei werden also ausschließlich die Sensordaten miteinander kombiniert, die zum einen einem gleichen Erfassungszeitschritt zugeordnet sind und andererseits von den Sensoren 12a des gleichen Typs stammen. In gleicher Weise kann auch in Schritt S20 eine unitemporale Datenfusion der von den Sensoren 12a des zweiten Typs erfassten Sensordaten durch die Vorverarbeitungseinrichtung 20 durchgeführt werden. Im allgemeinen ist es denkbar, nicht nur mehrere Laserscanner für die unitemporale Datenfusion zu verwenden, sondern ebenso Radarsensoren, unterschiedlich ausgeprägte Kameras, wie Mono-Kameras, StereoKameras, Fischaugenkameras, Time-of-Flight-Kameras, usw., oder andere Sensoren zu verwenden und deren Daten geeignet zu kombinieren. In der Vorverarbeitung, welche in den betreffenden Schritten S18 und S20 durchgeführt wird, werden einerseits die Sensormessungen aller Sensoren des gleichen Typs zur einer einheitlichen Punktewolke zusammengefügt, welche die Messung eines 3D-Laserscanner 30 emuliert. Andererseits erfolgt auch eine gezielte Verbesserung einzelner Datenpunkte. Während der Vorverarbeitung ist es weiterhin denkbar, eine für die nachfolgenden Schritte notwendige Transformation der Daten durchzuführen, wie zum Beispiel der Umwandlung in Objektlisten, Fences-Darstellungen oder Belegungsgitter.

Bei der Verwendung von Radarsensoren zur Approximation des 3D-Laserscanners 30 ist es zum Beispiel möglich, die Messunsicherheiten einzelner Reflexionen zu verringern. Bei typischen Radarsensoren steigt zum Beispiel der Winkelfehler mit steigendem Abstand von der Sensor Hauptachse. Durch Methoden der Sensordatenfusion besteht die Möglichkeit diesen Fehler in Bereichen mit sich überschneiden Sensorsichtbereichen, zu verringern und somit ein genaueres Abbild des Umfelds zu erzeugen.

Die Kombination der Sensormessungen beschränkt sich somit nicht ausschließlich auf die Position einer Messung, sondern umfasst zusätzlich Sensoreffekte wie Messunsicherheiten und Existenzwahrscheinlichkeiten. Zudem ist es auch möglich, weitere sensorspezifische Merkmale zu kombinieren, zum Beispiel die Intensitäten der Messung eines Laserscanner, die Farben einer RGB-Kamera oder die Geschwindigkeiten eines Radars.

Weiterhin kann das Kraftfahrzeug 10 noch andere Sensoren eines beliebigen Typs aufweisen, deren Sensordaten in den Schritten S14 und S16 ebenfalls erfasst werden können. Die in diesem Schritten S14 und S16 erfassten Sensordaten, sowie die in den Schritten S20 und S18 unitemporal fusionierten Daten können dann an einer Verarbeitungseinrichtung 22 zur weiteren Verarbeitung bereitgestellt werden. Diese kann beispielsweise in Schritt S22 die an ihr bereitgestellten Daten gemäß einer weiteren Sensordatenfusion, kombinieren. Zudem können auch weitere optionale Verarbeitungsschritte ausgeführt werden, wie zum Beispiel eine auf den nun insgesamt fusionierten Sensordaten basierende Situationsanalyse in S24 bis hin zur letztendlichen Funktionsausführung durch ein Fahrerassistenzsystem in Schritt S26. Auf Basis einer Situationsanalyse können zum Beispiel statische oder bewegte Hindernisse, Objekte, sowie die beschriebenen Personen, Kraftfahrzeuge oder Radfahrer detektiert und klassifiziert werden, sowie auch Straßenmarkierungen oder ähnliches. Auf Basis dieser Umfelddetektion und Klassifikation von Objekten können entsprechend in S26 entsprechende Fahrmanöver, insbesondere auch in voll- oder hochautomatisierter Weise durch das Kraftfahrzeug 10 durchgeführt werden.

Die erfindungsgemäße unitemporale Datenfusion kann somit in besonders vorteilhafterweise in eine Verarbeitungskette für das hoch- und vollautomatische bzw. pilotierte Fahren angeordnet werden.

Insgesamt wird so ein Kraftfahrzeug und ein Verfahren zur 360° Umgebungserfassung bereitgestellt, welche die Verwendung bestehender und gut erforschter Algorithmen durch das Schaffen derselben Datenbasis, wie beispielsweise 3D-Punktewolken, ermöglichen, sowie eine schnellere Entwicklung durch die Verwendung bekannter Algorithmen, eine effiziente Entwicklung durch direkte Übernahme von Forschungsergebnissen in Serienprodukte, eine Kostenreduktion durch den Einsatz einiger weniger günstige Sensoren und gegebenenfalls etablierter Sensortechnologien, einen versteckten Verbau der Sensoren, und eine sehr hohe Sicherheit für Fahrerassistenzsysteme und autonomes Fahren, insbesondere durch die Möglichkeit der gleichzeitigen Abbildung des kompletten Fahrzeugumfeldes mit unterschiedlichen Sensormessprinzipien, wie beispielsweise Radar und Laser.

## Patentansprüche

1. Kraftfahrzeug (10) mit einer Sensoranordnung (12) zur 360°-Erfassung einer Umgebung (16) des Kraftfahrzeugs (10),
wobei die Sensoranordnung (12) mehrere Sensoren (12a) aufweist, die von einem gleichen Typ sind, wobei die mehreren Sensoren (12a) jeweils einen vorbestimmten Erfassungsbereich (18a) aufweisen und über eine Außenseite (10a) des Kraftfahrzeugs (10) verteilt angeordnet sind, so dass die Erfassungsbereiche (18a) einen Gesamterfassungsbereich (18) bereitstellen, der in einem vorbestimmten Abstand zum Kraftfahrzeug (10) einen Bereich der Umgebung (16) in einem Vollwinkel um das Kraftfahrzeug (10) abdeckt, wobei die Sensoren (12a) derart eingerichtet sind, dass sie in jeweiligen aufeinanderfolgenden synchronisierten Zeitschritten die Umgebung (16) in ihrem jeweiligen Erfassungsbereich (18a) als jeweilige Sensordaten erfassen, wobei die Sensoranordnung eine Vorverarbeitungseinrichtung (20) aufweist, die derart eingerichtet ist, dass nur die Sensordaten der Sensoren (12a) vom gleichen Typ für einen jeweiligen gleichen Zeitschritt durch die Vorverarbeitungseinrichtung (20) fusioniert werden und aus den fusionierten Sensordaten ein in einer gemeinsamen Datenbasis dargestelltes dreidimensionales Abbild (26) des Bereichs der Umgebung (16) erzeugt wird, wobei zumindest zwei der Erfassungsbereiche (18a) der Sensoren (12a) sich überschneiden, wodurch ein Überschneidungsbereich (18b) bereitgestellt ist,
**dadurch gekennzeichnet, dass**
zu den Sensordaten auch in Abhängigkeit von einem Winkelfehler gegenüber einer Sensorhauptachse des jeweiligen Sensors jeweilige Messunsicherheiten bereitgestellt sind, wobei die Vorverarbeitungseinrichtung (20) dazu ausgelegt ist, einen Abgleich der von jeweiligen Sensoren (12a) im Überschneidungsbereich (18b) erfassten Sensordaten durchzuführen, und wobei die Vorverarbeitungseinrichtung (20) dazu ausgelegt ist, auf Basis des Abgleichs
- eine Sensordatenkorrektur durchzuführen, und zur Sensordatenkorrektur die einen gleichen Ortsbereich der Umgebung (16) betreffenden und von zwei jeweiligen Sensoren (12a), des gleichen Typs, erfassten Sensordaten mit einer Gewichtung in Abhängigkeit ihrer jeweiligen Messunsicherheiten zu mitteln; und/oder
- eine Messunsicherheitskorrektur durchzuführen, welche im Überschneidungsbereich (18b) redundant erfassten Sensordaten eine gegenüber ihren bereitgestellten Messunsicherheiten verringerte Messunsicherheit zuordnet; beziehungsweise
- eine Korrektur betreffend eine Existenzwahrscheinlichkeit, die die Existenz von Objekten in der Umgebung (16) betrifft, unter Berücksichtigung der korrigierbaren Messunsicherheiten durchzuführen.

2. Kraftfahrzeug (10) nach Anspruch 1,
**dadurch gekennzeichnet, dass**
die Sensoren (12a) jeweils Laserscanner darstellen.

3. Kraftfahrzeug (10) nach einem der vorhergehenden Ansprüche,
**dadurch gekennzeichnet, dass**
die Sensoren (12a) jeweils Radare oder Kameras oder Stereokameras oder Time-of-Flight-Kameras oder Ultraschallsensoren darstellen.

4. Kraftfahrzeug (10) nach einem der vorhergehenden Ansprüche,
**dadurch gekennzeichnet, dass**
die Vorverarbeitungseinrichtung dazu ausgelegt ist, die fusionierten Sensordaten als eine 3D-Punktewolke als Datenbasis bereitzustellen.

5. Kraftfahrzeug (10) nach einem der vorhergehenden Ansprüche,
**dadurch gekennzeichnet, dass**
die Vorverarbeitungseinrichtung dazu ausgelegt ist, die fusionierten Sensordaten in eine Objektlisten-Darstellung oder eine Fences-Darstellung oder eine Belegungsgitter-Darstellung umzuwandeln.

6. Kraftfahrzeug (10) nach einem der vorhergehenden Ansprüche,
**dadurch gekennzeichnet, dass**
die Sensoren (12a) dazu ausgelegt sind, eine von einer Positionsinformation verschiedene Information bereitzustellen, insbesondere eine Intensitätsinformation und/oder eine Farbinformation und/oder eine Geschwindigkeitsinformation eines erfassten Umgebungsbereichs in Relation zum Kraftfahrzeug (10), wobei das Kraftfahrzeug (10) eine Verarbeitungseinrichtung (22) aufweist, wobei die Vorverarbeitungseinrichtung (20) dazu ausgelegt ist, die in der gemeinsamen Datenbasis fusionierten Daten an die Verarbeitungseinrichtung (22) zu übermitteln, wobei die Verarbeitungseinrichtung (22) dazu ausgelegt ist, die fusionierten Sensordaten mit der durch die Sensoren (12a) bereitgestellten von der Positionsinformation verschiedenen Information zu kombinieren.

7. Kraftfahrzeug (10) nach einem der vorhergehenden Ansprüche,
**dadurch gekennzeichnet, dass**
die mehreren Sensoren (12a) in einer jeweiligen Höhe (H1, H2) angeordnet sind, wobei sich die jeweiligen Höhen (H1, H2) in einem vorbestimmten Höhenbereich in Bezug auf die Fahrzeughochachse (24) befinden.

8. Kraftfahrzeug (10) nach einem der vorhergehenden Ansprüche,
**dadurch gekennzeichnet, dass**
mehrere erste Sensoren (12a) der mehreren Sensoren (12a) in einer jeweiligen ersten Höhe (H1) angeordnet sind und mehrere zweite Sensoren (12a) der mehreren Sensoren (12a) in einer jeweiligen zweiten Höhe (H2) angeordnet sind, wobei die jeweiligen ersten Höhen (H1) in einem vorbestimmten ersten Höhenbereich in Bezug auf die Fahrzeughochachse (24) angeordnet sind, und die jeweiligen zweiten Höhen (H2) in einem zweiten Höhenbereich in Bezug auf die Fahrzeughochachse (24) angeordnet sind, der höher ist als der erste Höhenbereich.

9. Verfahren zum 360°-Erfassen einer Umgebung eines Kraftfahrzeugs (10), wobei mehrere Sensoren (12a) des gleichen Typs in jeweiligen synchronisierten Zeitschritten einen jeweiligen Erfassungsbereich (18a) betreffende Sensordaten bereitstellen, wobei die jeweiligen Erfassungsbereiche (18a) einen Gesamterfassungsbereich (18) bereitstellen, der in einem vorbestimmten Abstand zum Kraftfahrzeug (10) einen Bereich der Umgebung (16) in einem Vollwinkel um das Kraftfahrzeug (10) abdeckt, wobei eine Vorverarbeitungseinrichtung (20) nur die Sensordaten der Sensoren (12a) vom gleichen Typ für einen jeweiligen gleichen Zeitschritt fusioniert und aus den fusionierten Sensordaten ein in einer gemeinsamen Datenbasis dargestelltes dreidimensionales Abbild (26) des Bereichs der Umgebung (16) erzeugt, wobei zumindest zwei der Erfassungsbereiche (18a) der Sensoren (12a) sich überschneiden, wodurch ein Überschneidungsbereich (18b) bereitgestellt ist, wobei die Vorverarbeitungseinrichtung (20) einen Abgleich der von jeweiligen Sensoren (12a) im Überschneidungsbereich (18b) erfassten Sensordaten durchführt,
**dadurch gekennzeichnet, dass**
zu den Sensordaten auch in Abhängigkeit von einem Winkelfehler gegenüber einer Sensorhauptachse des jeweiligen Sensors jeweilige Messunsicherheiten bereitgestellt werden und die Vorverarbeitungseinrichtung (20) einen Abgleich der von jeweiligen Sensoren (12a) im Überschneidungsbereich (18b) erfassten Sensordaten durchführt und auf Basis des Abgleichs
- eine Sensordatenkorrektur durchführt, und zur Sensordatenkorrektur die einen gleichen Ortsbereich der Umgebung (16) betreffenden und von zwei jeweiligen Sensoren (12a), des gleichen Typs, erfassten Sensordaten mit einer Gewichtung in Abhängigkeit ihrer jeweiligen Messunsicherheiten mittelt; und/oder
- eine Messunsicherheitskorrektur durchführt, welche redundanten Sensordaten eine gegenüber ihren bereitgestellten Messunsicherheiten verringerte Messunsicherheit zuordnet; beziehungsweise
- eine Korrektur betreffend eine Existenzwahrscheinlichkeit, die die Existenz von Objekten in der Umgebung (16) betrifft, unter Berücksichtigung der korrigierbaren Messunsicherheiten durchführt.

## Claims

1. Motor vehicle (10) comprising a sensor assembly (12) for 360° detection of the surroundings (16) of the motor vehicle (10),
wherein the sensor assembly (12) has multiple sensors (12a) of the same type, wherein each of the multiple sensors (12a) respectively has a specified detection region (18a), and the sensors are distributed over the exterior (10a) of the motor vehicle (10) such that the detection regions (18a) provide a complete detection region (18) which covers a region of the surroundings (16) in a complete angle around the motor vehicle (10) at a specified distance from the motor vehicle (10), wherein the sensors (12a) are designed to detect the surroundings (16) in their respective detection region (18a) as respective sensor data in respective successive synchronised time increments, wherein the sensor assembly has a pre-processing device (20) which is configured in such a way that only the sensor data of the sensors (12a) of the same type for a respective same time increment are merged by the pre-processing device (20) and a three-dimensional image (26), represented in a common database, of the region of the surroundings (16) is generated from the merged sensor data, wherein at least two of the detection regions (18a) of the sensors (12a) overlap, whereby an overlap region (18b) is provided,
**characterised in that**
respective measurement uncertainties are provided for the sensor data as a function of an angular error with respect to a sensor main axis of the respective sensor, wherein the pre-processing device (20) is designed to carry out a comparison of the sensor data detected by respective sensors (12a) in the overlap region (18b), and wherein the pre-processing device (20) is designed, on the basis of the comparison,
- to carry out a sensor data correction, and to average, for the sensor data correction, the sensor data relating to a same local area of the surroundings (16) and detected by two respective sensors (12a), of the same type, with a weighting depending on their respective measurement uncertainties; and/or
- to carry out a measurement uncertainty correction which assigns a measurement uncertainty, reduced compared to the measurement uncertainties provided, to sensor data detected redundantly in the overlap region (18b); or
- to carry out a correction relating to an existence probability, which concerns the existence of objects in the surroundings (16), taking into account the correctable measurement uncertainties.

2. Motor vehicle (10) according to claim 1,
**characterised in that**
the sensors (12a) respectively represent laser scanners.

3. Motor vehicle (10) according to any one of the preceding claims,
**characterised in that**
the sensors (12a) respectively represent radars or cameras or stereo cameras or time-of-flight cameras or ultrasonic sensors.

4. Motor vehicle (10) according to any one of the preceding claims,
**characterised in that**
the pre-processing device is designed to provide the merged sensor data as a 3D point cloud as a database.

5. Motor vehicle (10) according to any one of the preceding claims,
**characterised in that**
the pre-processing device is designed to convert the merged sensor data into an object list representation or a fence representation or an occupancy grid representation.

6. Motor vehicle (10) according to any one of the preceding claims,
**characterised in that**
the sensors (12a) are designed to provide information different from position information, in particular intensity information and/or colour information and/or speed information of a detected surrounding area in relation to the motor vehicle (10), wherein the motor vehicle (10) has a processing device (22), wherein the pre-processing device (20) is designed to transmit the data merged in the common database to the processing device (22), wherein the processing device (22) is designed to combine the merged sensor data with the information provided by the sensors (12a) and different from the position information.

7. Motor vehicle (10) according to any one of the preceding claims,
**characterised in that**
the plurality of sensors (12a) are arranged at a respective height (H1, H2), wherein the respective heights (H1, H2) are located in a specified height range with respect to the vehicle vertical axis (24).

8. Motor vehicle (10) according to any one of the preceding claims,
**characterised in that**
a plurality of first sensors (12a) of the plurality of sensors (12a) are arranged at a respective first height (H1) and a plurality of second sensors (12a) of the plurality of sensors (12a) are arranged at a respective second height (H2), wherein the respective first heights (H1) are arranged in a specified first height range with respect to the vehicle vertical axis (24), and the respective second heights (H2) are arranged in a second height range with respect to the vehicle vertical axis (24), which is higher than the first height range.

9. Method for 360° detection of the surroundings of a motor vehicle (10), wherein a plurality of sensors (12a) of the same type in respective synchronised time increments provide sensor data relating to a respective detection region (18a), wherein the respective detection regions (18a) provide a complete detection region (18) which covers a region of the surroundings (16) in a complete angle around the motor vehicle (10) at a specified distance from the motor vehicle (10), wherein a pre-processing device (20) only merges the sensor data of the sensors (12a) of the same type for a respective same time increment and generates a three-dimensional image (26), represented in a common database, of the region of the surroundings (16) from the merged sensor data, wherein at least two of the detection regions (18a) of the sensors (12a) overlap, whereby an overlap region (18b) is provided, wherein the pre-processing device (20) carries out a comparison of the sensor data detected by respective sensors (12a) in the overlap region (18b),
**characterised in that**
measurement uncertainties are provided for the sensor data as a function of an angular error with respect to a sensor main axis of the respective sensor, and the pre-processing device (20) carries out a comparison of the sensor data recorded by respective sensors (12a) in the overlap region (18b) and on the basis of the comparison
- carries out a sensor data correction, and for the sensor data correction averages the sensor data relating to the same local area of the surroundings (16) and detected by two respective sensors (12a), of the same type, with a weighting depending on their respective measurement uncertainties; and/or
- carries out a measurement uncertainty correction which assigns redundant sensor data to a measurement uncertainty that is reduced compared to the measurement uncertainties provided; or
- carries out a correction relating to an existence probability, which concerns the existence of objects in the surroundings (16), taking into account the correctable measurement uncertainties.

## Revendications

1. Véhicule automobile (10) avec un dispositif capteur (12) pour la détection à 360° d'un environnement (16) du véhicule automobile (10),
dans lequel le dispositif capteur (12) présente plusieurs capteurs (12a) qui sont d'un même type,
dans lequel les multiples capteurs (12a) présentent chacun une zone de détection prédéterminée (18a) et sont agencés de manière répartie sur un côté extérieur (10a) du véhicule automobile (10) de telle sorte que les zones de détection (18a) fournissent une zone de détection globale (18) qui couvre à une distance prédéterminée du véhicule automobile (10) une zone de l'environnement (16) à 360° autour du véhicule automobile (10),
dans lequel les capteurs (12a) sont conçus de telle sorte qu'ils détectent l'environnement (16) dans leur zone de détection respective (18a) comme données de capteurs respectives à des intervalles de temps successifs synchronisés respectifs,
dans lequel le dispositif capteur présente un dispositif de prétraitement (20) qui est conçu de telle sorte que seules les données de capteurs des capteurs (12a) du même type pour un même intervalle de temps respectif sont fusionnées par le dispositif de prétraitement (20) et, à partir des données de capteurs fusionnées, une image tridimensionnelle (26), représentée dans une base de données commune, de la zone de l'environnement (16) est produite,
dans lequel au moins deux des zones de détection (18a) des capteurs (12a) se chevauchent, ce qui donne une zone de chevauchement (18b),
**caractérisé en ce que**
des incertitudes de mesure respectives sont aussi fournies pour les données de capteurs en fonction d'une erreur angulaire par rapport à un axe principal de mesure du capteur respectif,
dans lequel le dispositif de prétraitement (20) est conçu pour effectuer un équilibrage des données de capteurs détectées par des capteurs respectifs (12a) dans la zone de chevauchement (18b)
et dans lequel le dispositif de prétraitement (20) est conçu pour, sur la base de l'équilibrage,
- effectuer une correction de données de capteurs et, en vue de la correction de données de capteurs, faire la moyenne des données de capteurs, concernant une même zone locale de l'environnement (16) et détectées par deux capteurs respectifs (12a) du même type, avec une pondération en fonction de leurs incertitudes de mesure respectives ; et/ou
- effectuer une correction d'incertitude de mesure qui associe à des données de capteurs détectées de manière redondante dans la zone de chevauchement (18b) une incertitude de mesure réduite par rapport à leurs incertitudes de mesure fournies ; respectivement
- effectuer une correction concernant une probabilité d'existence, qui concerne l'existence d'objets dans l'environnement (16), en tenant compte des incertitudes de mesure corrigeables.

2. Véhicule automobile (10) selon la revendication 1, **caractérisé en ce que** les capteurs (12a) représentent à chaque fois des scanners laser.

3. Véhicule automobile (10) selon l'une quelconque des revendications précédentes, **caractérisé en ce que** les capteurs (12a) représentent à chaque fois des radars ou des caméras ou des caméras stéréo ou des caméras Temps-de-Vol ou des capteurs à ultrasons.

4. Véhicule automobile (10) selon l'une quelconque des revendications précédentes, **caractérisé en ce que** le dispositif de prétraitement est conçu pour fournir comme base de données les données de capteurs fusionnées sous la forme d'un nuage de points en 3D.

5. Véhicule automobile (10) selon l'une quelconque des revendications précédentes, **caractérisé en ce que** le dispositif de prétraitement est conçu pour transformer les données de capteurs fusionnées en une représentation avec liste d'objets ou en une représentation Fences ou en une représentation avec grille d'occupation.

6. Véhicule automobile (10) selon l'une quelconque des revendications précédentes,
**caractérisé en ce que** les capteurs (12a) sont conçus pour fournir une information différente d'une information de position, en particulier une information d'intensité et/ou une information de couleur et/ou une information de vitesse d'une zone d'environnement détectée en relation avec le véhicule automobile (10),
dans lequel le véhicule automobile (10) présente un dispositif de traitement (22),
dans lequel le dispositif de prétraitement (20) est conçu pour transmettre les données fusionnées dans la base de données commune au dispositif de traitement (22),
dans lequel le dispositif de traitement (22) est conçu pour combiner les données de capteurs fusionnées aux informations différentes de l'information de position qui sont fournies par les capteurs (12a).

7. Véhicule automobile (10) selon l'une quelconque des revendications précédentes,
**caractérisé en ce que** les multiples capteurs (12a) sont agencés à une hauteur respective (H1, H2),
dans lequel les hauteurs respectives (H1, H2) se trouvent dans une plage de hauteurs prédéterminée par rapport à l'axe vertical de véhicule (24).

8. Véhicule automobile (10) selon l'une quelconque des revendications précédentes,
**caractérisé en ce que** plusieurs premiers capteurs (12a) parmi les multiples capteurs (12a) sont agencés à une première hauteur respective (H1) et plusieurs deuxièmes capteurs (12a) parmi les multiples capteurs (12a) sont agencés à une deuxième hauteur respective (H2),
dans lequel les premières hauteurs respectives (H1) sont agencées dans une première plage de hauteurs prédéterminée par rapport à l'axe vertical de véhicule (24) et les deuxièmes hauteurs respectives (H2) sont agencées dans une deuxième plage de hauteurs par rapport à l'axe vertical de véhicule (24) qui est plus haute que la première plage de hauteurs.

9. Procédé pour la détection à 360° d'un environnement d'un véhicule automobile (10),
dans lequel plusieurs capteurs (12a) du même type fournissent à des intervalles de temps synchronisés respectifs des données de capteur concernant une zone de détection respective (18a),
dans lequel les zones de détection respectives (18a) fournissent une zone de détection globale (18) qui couvre à une distance prédéterminée du véhicule automobile (10) une zone de l'environnement (16) à 360° autour du véhicule automobile (10),
dans lequel un dispositif de prétraitement (20) fusionne seulement les données de capteurs des capteurs (12a) du même type pour un même intervalle de temps respectif et produit à partir des données de capteur fusionnées une image tridimensionnelle (26), représentée dans une base de données commune, de la zone de l'environnement (16),
dans lequel au moins deux des zones de détection (18a) des capteurs (12a) se chevauchent, ce qui donne une zone de chevauchement (18b),
dans lequel le dispositif de prétraitement (20) effectue un équilibrage des données de capteur détectées par des capteurs respectifs (12a) dans la zone de chevauchement (18b),
**caractérisé en ce que**
des incertitudes de mesure respectives sont aussi fournies pour les données de capteurs en fonction d'une erreur angulaire par rapport à un axe principal de mesure du capteur respectif et le dispositif de prétraitement (20) effectue un équilibrage des données de capteurs détectées par des capteurs respectifs (12a) dans la zone de chevauchement (18b) et, sur la base de l'équilibrage,
- effectue une correction de données de capteurs et, en vue de la correction de données de capteurs, fait la moyenne des données de capteurs, concernant une même zone locale de l'environnement (16) et détectées par deux capteurs respectifs (12a) du même type, avec une pondération en fonction de leurs incertitudes de mesure respectives ; et/ou
- effectue une correction d'incertitude de mesure qui associe à des données de capteurs redondantes une incertitude de mesure réduite par rapport à leurs incertitudes de mesure fournies ; respectivement
- effectue une correction concernant une probabilité d'existence, qui concerne l'existence d'objets dans l'environnement (16), en tenant compte des incertitudes de mesure corrigeables.
